# EUROPÄISCHE PATENTSCHRIFT

(11) **EP 1 771 457 B1**
(45) Veröffentlichungstag und Bekanntmachung des Hinweises auf die Patenterteilung: **12.12.2007**
(21) Anmeldenummer: 05762764.8
(22) Anmeldetag: 30.06.2005
(51) Int. Cl.: C07F 7/18

(54) **ORGANOSILICIUMVERBINDUNGEN MIT EINER MASKIERTEN ISOCYANATGRUPPE**
ORGANOSILICON COMPOUNDS WITH A MASKED ISOCYANATE GROUP
COMPOSES ORGANOSILICIUM COMPORTANT UN GROUPE ISOCYANATE MASQUE

(30) Priorität: 29.07.2004 DE 102004036721
(43) Veröffentlichungstag der Anmeldung: 11.04.2007
(73) Patentinhaber: Wacker Chemie AG, 81737 München (DE)
(72) Erfinder: PFEIFFER, Jürgen, 84489 Burghausen (DE); GOTTSCHALK-GAUDIG, Torsten, 84561 Mehring (DE); KORNEK, Thomas, 84489 Burghausen (DE); STANJEK, Volker, 81477 München (DE); POPP, Alfred, 82008 Unterhaching (DE)
(74) Vertreter: Fritz, Helmut
(86) Internationale Anmeldenummer: PCT/EP2005/007079
(87) Internationale Veröffentlichungsnummer: WO 2006/012957

(56) Entgegenhaltungen:
- DE-A1- 10 240 388
- US-A- 4 036 813
- US-A1- 2002 016 486

## Beschreibung

Die vorliegende Erfindung betrifft Organosiliciumverbindungen mit einer durch ein Blockierungsmittel maskierten Isocyanatgruppe, Verfahren zu deren Herstellung, Verfahren zur Abspaltung der Blockierungsmittel sowie die Verwendung der Organosiliciumverbindungen.

Organofunktionelle Silane, also Verbindungen, die neben einer Silylgruppe auch eine organofunktionelle Gruppe enthalten, haben in verschiedensten Anwendungen als Haftvermittler, Quervernetzer oder auch zur Modifizierung von Oberflächen großtechnische Bedeutung erlangt. Von besonderer Bedeutung ist in diesem Zusammenhang die Isocyanatfunktion, die aufgrund ihrer hohen Reaktivität gegenüber protischen Verbindungen wie z.B. Alkoholen, Aminen, Oximen u.ä. auf vielfältige Weise reagieren kann. Häufig wird jedoch, wie zum Beispiel bei der Anwendung von Isocyanaten in wässriger Umgebung oder in isocyanatvernetzenden einkomponentigen Lacksystemen, eine maskierte Form eines Isocyanates benötigt, um eine ungewollte vorzeitige Reaktion des Isocyanates zu verhindern. Zu diesem Zweck werden großtechnisch häufig Isocyanate eigensetzt, deren Isocyanatfunktion mit einer Gruppierung blockiert ist, die thermisch abspaltbar ist (D. A. Wicks, Z. W. Wicks, Prog. Org. Coat. 1999, 36, 148-172). Diese durch ein Blockiermittel maskierten Isocyanate sind häufig auf einfache Weise herstellbar und weisen darüber hinaus eine im Vergleich zum freien organischen Isocyanat deutlich reduzierte Toxizität auf. Einige maskierte Isocyanatgruppen aufweisende Organosiliciumverbindungen sind z.B. aus DE 34 24 534 A1, EP 0 212 058 B1, JP 08-291186 oder JP 10-067787 bekannt. Allerdings ist all diesen Verbindungen gemeinsam, daß sich zwischen der maskierten Isocyanatgruppe und der Silylgruppe eine Propylengruppe befindet, wodurch die Hydrolyse- und Kondensationsreaktivität dieser Verbindungen vergleichsweise gering ist. Dies führt dazu, daß zur Umsetzung dieser Verbindungen häufig höhere Temperaturen notwendig sind, was dazu führt, daß das Blockierungsmittel zu einem ungewollten Zeitpunkt abgespalten wird und diese Verbindungen dadurch für viele Anwendungen ungeeignet sind, oder große Nachteile aufweisen.

Deshalb bestand die Aufgabe, maskierte Isocyanatgruppen tragende Organosiliziumverbindungen mit hoher Hydrolyse- und Kondensationsreaktivität sowie Verfahren zu deren Herstellung zur Verfügung zu stellen.

Gegenstand der Erfindung sind Organosiliciumverbindungen der allgemeinen Formel (I)

(RO)₃₋ₙ(R¹)ₙSi-CH₂-N(H)-C(O)-X (I),

wobei
- **R**: ein C₁-C₁₅-Kohlenwasserstoff-Rest oder ein Acetylrest,
- **R¹**: ein Wasserstoffatom oder einen gegebenenfalls mit -CN,-NCO, -NR^{x}₂, -COOH, -COOR^{x}, -Halogen, -Acryl, -Epoxy, -SH,-OH oder -CONR^{x}₂ substituierten Si-C gebundenen C₁-C₂₀-Kohlenwasserstoffrest, in dem jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N=,-N=N-,oder -P= ersetzt sein können,
- n: die Werte 0, 1, 2,
- **X**: eine Gruppe, die ausgewählt wird aus den Gruppen -NR²R³, -S-R⁵, -C(H)(CO₂R⁵)₂ und -O-N=CR²R³ und
- **R², R³** und **R⁵**: die Bedeutungen von **R¹** aufweisen, oder einen zyklischen, gegebenenfalls verzweigten Kohlenwasserstoffrest mit 2-30 Kohlenstoffatomen mit mindestens 3 Ringatomen, der gegenbenenfalls durch eine oder mehrere Gruppen -O-, -CO-, -COO-, -OCO-, -S-, =N-,-NR¹-, -CONR¹- funktionalisiert sein kann,
bedeuten.

Bei thermischer Belastung der Organosiliciumverbindungen der allgemeinen Formel (I) wird das jeweilige Blockierungsmittel H**X** abgespalten und es entstehen die freien Isocyanatgruppen.

Mechanismen zur Abspaltung der Blockierungsmittel H**X**, Abspaltungstemperaturen sowie Methoden zur deren Bestimmung sind dem Fachmann z.B. aus D.A. Wicks, Z-W. Wicks, Prog. Org. Coatings, 1999, 36, 148-172 oder H. Bach, C. Gürtler, S. Nowak, Farbe & Lack 12/2003, 109, 32-42 bekannt.

Die Abspaltungstemperatur kann gegebenenfalls durch Katalysatoren wie Bismut- oder Zinnverbindungen oder auch Amine beeinflusst werden.

Die Abspaltung des Blockierungsmittels H**X** aus den blockierte Isocyanatgruppen aufweisenden Organosiliciumverbindungen der allgemeinen Formel (I) kann bevorzugt in einem Temperaturbereich von 30 - 250 °C, besonders bevorzugt von 50 - 180 °C und inbesondere bevorzugt in einem Temperaturbereich von 80 - 150 °C erfolgen.

Die durch thermische Belastung abgespaltbaren Blockierungsmittel H**X** weisen bevorzugt Molekulargewichte M < 500, und besonders bevorzugt M < 200 auf.

Gegenstand der Erfindung ist auch ein Verfahren zur Abspaltung der Blockierungsmittel H**X** in einem Temperaturbereich von 30 - 250 °C aus den Organosiliciumverbindungen der allgemeinen Formel (I).

Bevorzugte Bedeutungen von **R** sind C₁-C₈-Kohlenwasserstoff-Rest, besonders bevorzugt C₁-C₃-Alkyl-Rest, insbesondere Methyl- oder Ethylrest oder Acetylrest.

Bevorzugte Bedeutungen von **R¹** sind C₁-C₈-KohlenwasserstoffRest, besonders bevorzugt C₁-C₃-Alkyl-Rest, insbesondere Methyl- oder Ethylrest.

Die Reste **R², R³** und **R⁵** können substituiert sein mit Halogenatomen, insbesondere Fluor und Chlor.

Die Herstellung der blockierte Isocyanatgruppen aufweisenden Organosiliciumverbindungen der allgemeinen Formel (I) kann nach beliebigen Verfahren erfolgen.

Die Erfindung betrifft auch ein Verfahren zur Herstellung der Organosiliciumverbindungen der allgemeinen Formel (I), bei dem Isocyanatgruppen aufweisende Organosiliciumverbindungen allgemeinen Formel (II)

(RO)₃₋ₙ(R¹)ₙSi-CH₂-N=C=O (II),

mit Verbindungen H**X** umgesetzt werden, wobei **R**, **R¹**, **X** und **n** die vorstehend beschriebenen Bedeutungen aufweisen.

Die Herstellung wird bevorzugt in Anwesenheit eines basischen oder metallhaltigen Katalysators durchgeführt. Als basische Katalysatoren sind Alkali- und Erdalkalihydroxide, insbesondere Natrium- und Kaliumhydroxid bevorzugt.

Die Erfindung betrifft auch ein Verfahren zur Herstellung der Organosiliciumverbindungen der allgemeinen Formel (I), bei dem Chloralkylgruppen aufweisende Organosiliciumverbindungen der allgemeinen Formel (III)

(RO)₃₋ₙ(R¹)ₙSi-CH₂-Cl (III),

mit Verbindungen H**X** und Salzen der allgemeinen Formel (IV),

M(OCN)ₘ (IV),

umgesetzt werden, wobei
- **M**: ein Alkali- oder Erdalkalimetall und
- **m**: die Werte 1 oder 2 bedeuten und
- **R, R¹, X** und **n**: die vorstehend beschriebenen Bedeutungen aufweisen.

Bei der Umsetzung können neben Verbindungen der allgemeinen Formeln (III), (IV) und H**X** auch weitere, die Umsetzung fördernde Substanzen anwesend sein.

Beispiele für Blockierungsmittel H**X**, die bei thermischer Belastung aus den Organosiliciumverbindungen der allgemeinen Formel (I) abgespalten werden können sind Ketonoxime wie zum Beispiel 2-Butanonoxim, Methyl-n-amylketonoxim, Methylisoamylketonoxim, Cyclohexanonoxim, Methylisopropylketonoxim, Methylisobutylketonoxim, Diisobutylketonoxim, Methyl-tert.~butylketonoxim, Diisopropylketonoxim, 2,2,6,6-Tetramethylcyclohexanonoxim, oder auch Tetramethylcyclobutandionmonooxim; Thiole wie zum Beispiel Thiophenol oder 2-Mercaptopyridin; CH-azide Verbindungen wie zum Beispiel. Malonsäuredimethylester, Malonsäurediethylester, Acetessigsäuremethylester, Acetessigsäureethylester, Cyanessigsäureethylester, Cyanessigsäuremethylester, oder Acetylaceton; Amine wie zum Beispiel Methylphenylamin, Diphenylamin, Naphthylphenylamin, Diisopropylamin, Dicyclohexylamin, Ethylisopropylamin, Benzyl-tert.butylamin, Tert.-butylmethylamin, Tert.-Butylisopropylamin oder 2,2,6,6-Tetramethylpiperidin; oder auch heterocylische Verbindungen wie Imidazol, 2-Isopropylimidazol, 3,5-Dimethylpyrazol und 5-Methyl-2,3-dihydropyrazol-3-on.

Weitere Blockierungsmittel H**X**, die aus den erfindungsgemässen blockierte Isocyanatgruppen tragenden Organosiliciumverbindungen durch thermische Belastung abgespalten werden können, sind z.B. ε-Caprolactam, γ-Lactam, δ-Lactam, N-Methylacetamid, N-Ethylacetamid, N-Propylacetamid oder N-Isopropylacetamid.

Bevorzugte Blockierungsmittel H**X**, die bei thermischer Belastung aus blockierte Isocyanatgruppen tragenden Siliciumverbindungen der allgemeinen Formel (I) abgespalten werden können sind z.B. 2-Butanonoxim, Cyclohexanonoxim, Methylisopropylketonoxim, Methylisobutylketonoxim, Methyl-tert.-butylketonoxim, Diisopropylketonoxim, 2,2,6,6-Tetramethylcyclohexanonoxim, Tetramethylcyclobutandionmonooxim, Thiophenol oder 2-Mercaptopyridin, Malonsäuredimethylester, Malonsäurediethylester, Acetessigsäureethylester. Cyanessigsäureethylester, Acetylaceton, Methylphenylamin, Diphenylamin, Diisopropylamin, Dicyclohexylamin, Benzyl-tert.-butylamin, Tert.-butylmethylamin, Tert-Butyl-isopropylamin 2,2,6,6-Tetramethylpiperidin, Imidazol, 2-Isopropylimidazol, 3,5-Dimethylpyrazol, 5-Methyl-2,3-dihydropyrazol-3-on, ε-Caprolactam oder *N*-Methylacetamid.

Besonders bevorzugte Blockierungsmittel H**X**, die bei thermischer Belastung aus blockierte Isocyanatgruppen tragenden Siliciumverbindungen der allgemeinen Formel (I) abgespalten werden können sind 2-Butanonoxim, Malonsäuredimethylester, Acetessigsäureethylester, Diisopropylamin, Benzyl-tert.-butylamin, Tert.-butylmethylamin, Tert.-Butylisopropylamin, 2-Isopropylimidazol, 3,5-Dimethylpyrazol und ε-Caprolactam.

Gegenstand der Erfindung ist auch die Verwendung der Organosiliciumverbindungen der allgemeinen Formel (I) in Beschichtungsmitteln.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Beispiel 1: Herstellung von Hexahydro-N-[(methoxydimethylsilyl)methyl]-2-oxo-1H-azepin-1-carboxamid

Eine Lösung von 1,45 g (Isocyanatomethyl)methoxydimethylsilan und 1,13 g ε-Caprolactam in 25 ml wasserfreiem Dioxan wurde 4 h unter Rühren zum Rückfluss erhitzt. Anschließend entfernte man das Lösemittel unter vermindertem Druck. Man erhielt Hexahydro-*N*-[(methoxydimethylsilyl)methyl]-2-oxo-1H-azepin-1-carboxamid in quantitativer Ausbeute und einer Reinheit von >90% (Analyse mittels ¹H-NMR).
¹H NMR (500 MHz, CHLOROFORM-D) δ ppm 0.15-0.31 (m, 6 H), 1.59-1.86 (m, 6 H), 2.70 (dd, *J* = 6.3 und 4.7 Hz, 2 H), 2.82 (d, *J* = 5.0 Hz, 2 H), 3.48 (s, 3 H), 3.99 (dd, *J* = 5.0 und 3.8 Hz, 2 H), 9.25 (s, 1 H).

### Beispiel 2a: Herstellung von N-[(Methoxydimethylsilyl)methyl]-2-oxo-1-pyrrolidincarboxamid

Beispiel 1 wurde mit der Änderung wiederholt, daß anstelle von ε-Caprolactam 0,85 g 2-Pyrrolidinon eingesetzt wurden. Man erhielt *N*-[(Methoxydimethylsilyl)methyl]-2-oxo-1-pyrrolidincarboxamid in quantitativer Ausbeute und einer Reinheit von >90% (Analyse mittels ¹H-NMR).
¹H NMR (500 MHz, CHLOROFORM-D) δ ppm 0.21 (s, 6 H), 2.04 (tt, *J* = 7.6 Hz, 2 H), 2.61 (t, *J* = 7.9 Hz, 2 H), 2.83 (d, *J* = 5.4 Hz, 2 H), 3.49 (s, 3 H), 3.87 (t, *J* = 6.9 Hz, 2 H), 8.38 (s, 1H).

### Beispiel 2b: Herstellung von N-[(Methoxydimethylsilyl)methyl]-2-oxo-1-pyrrolidincarboxamid

Eine Mischung von 69,3 g (Chlormethyl)methoxydimethylsilan, 40,6 g Kaliumcyanat und 42,6 g 2-Pyrrolidinon in 150 ml wasserfreiem DMF wurde 5 h unter Rühren auf 130 °C erhitzt. Anschließend wurde das Lösungsmittel unter vermindertem Druck entfernt. Man erhielt *N*-[(Methoxydimethylsilyl)methyl]-2-oxo-1-pyrrolidincarboxamid in quantitativer Ausbeute und einer Reinheit von >90% (Analyse mittels ¹H-NMR, siehe Beispiel 2a).

### Beispiel 3a: Vergleichsbeispiel für die Umsetzung von 2-Butanonoxim mit (Isocyanatomethyl)dimethoxy(methyl)silan ohne Katalysator

Zu einer gerührten und auf 60° C temperierten Mischung von 135 g 2-Butanonoxim wurden innerhalb von 60 min 250 g (Isocyanatomethyl)dimethoxy(methyl)silan zugegeben. Nach beendeter Zugabe rührte man die Mischung weitere 10 h bei der angegebenen Temperatur. Es konnte kein N-{[Dimethoxy(methyl)-silyl]methyl}carbamoylmethylethylketonoxim nachgewiesen werden (Analyse mittels ²⁹Si- und ¹H-_{NMR}).

### Beispiel 3b : Herstellung von N-[(Trimethoxysilyl)methyl]carbamoylmethylethylketonoxim unter metallischer Katalyse

Zu einer gerührten und auf 80° C temperierten Mischung von 86,1 g 2-Butanonoxim und 120 mg "Borchi-Katalysator" (Katalysator VP 0244 der Firma Borchers GmbH, Langenfeld) wurden innerhalb von 60 min 150 g (Isocyanatomethyl)trimethoxysilan zugegeben. Nach beendeter Zugabe rührte man die Mischung weitere 60 min bei der angegebenen Temperatur und entfernte überschüssiges 2-Butanonoxim durch Destillation. Man erhielt *N-*[(Trimethoxysilyl)methyl]carbamoylmethylethylketonoxim in quantitativer Ausbeute und einer Reinheit von >95% (Analyse mittels ²⁹Si- und ¹H-NMR).
¹H NMR (500 MHz, CHLOROFORM-D) δ ppm 1.05-1.17 (m, 3 H), 1.86-2.02 (m, 3 H), 2.20-2.51 (m, 2 H), 2.73-3.03 (m, 2 H) 3.45-3.77 (m, 9 H), 6.15-6.55 (m, 1 H).

### Beispiel 3c: Herstellung von N-{[Dimethoxy(methyl)silyl]methyl}carbamoylmethylethylketonoxim unter basischer Katalyse

Zu einer gerührten und auf 60° C temperierten Mischung von 135 g 2-Butanonoxim und 12,0 mg Kaliumhydroxid wurden innerhalb von 60 min 250 g (Isocyanatomethyl)dimethoxy(methyl)silan zugegeben. Nach beendeter Zugabe rührte man die Mischung weitere 60 min bei der angegebenen Temperatur. Man erhielt *N-*{[Dimethoxy(methyl)silyl]methyl}carbamoylmethylethylketonoxim in quantitativer Ausbeute und einer Reinheit von >95% (Analyse mittels²⁹Si- und ¹H-NMR).
¹H NMR (500 MHz, BENZOL-D6) δ ppm 0.20 und 0.21 (2 s, 3 H), 0.80 und 0.86 (2 t, 3 H, *J* = 7.6 Hz), 1.53 und 1.65 (2 s, 3 H, *J* = 59.9 Hz), 1.86 und 2.19 (2 q, 2 H, *J* = 7.9 Hz), 3.00 und 3.01 (2 d, 2 H, *J* = 5.3 Hz), 3.44 (s, 6 H), 6.53-6.56 (2 br. s, 1 H).

### Beispiel 3d: Herstellung von N-{[Dimethoxy(methyl)silyl]methyl}carbamoyldimethylketonoxim unter basischer Katalyse

Beispiel 3c wurde mit der Änderung wiederholt, daß anstelle von 2-Butanonoxim eine Lösung von 113 g Acetonoxim in 400 ml Toluol eingesetzt wurde. Nach destillativer Entfernung des Lösemittels unter vermindertem Druck erhielt man *N-*{[Dimethoxy(methyl)silyl]methyl}carbamoyldimethylketonoxim in quantitativer Ausbeute und einer Reinheit von >95% (Analyse mittels ²⁹Si- und ¹H-NMR).
¹H NMR (500 MHz, BENZOL-D6) δ ppm 0.21 (s, 3 H), 1.41 (s, 3 H), 1.56 (s, 3 H), 3.03 (d, 2 H, *J* = 5.0 Hz), 3.43 (s, 6 H), 6.47 (br. s, 1 H).

### Beispiel 4a: Herstellung von N-[(Methoxydimethylsilyl)methyl]-N' ,N'-diisopropylharnstoff aus (Isocyanatomethyl)methoxydimethylsilan

Zu einer gerührten und auf 80° C temperierten Mischung von 10,1 g *N*,*N*-Diisopropylamin und 20,0 mg "Borchi-Katalysator" wurden innerhalb von 60 min 14,5 g (Isocyanatomethyl)methoxydimethylsilan zugegeben. Nach beendeter Zugabe rührte man die Mischung weitere 60 min bei der angegebenen Temperatur. Man erhielt *N-*[(Methoxydimethylsilyl)methyl]-*N*',*N*'-diisopropylharnstoff nach fraktionierender Destillation (Sdp. 93-98° C/1 mbar) in 64%iger Ausbeute und einer Reinheit von >95% (Analyse mittels ²⁹Si- und ¹H-NMR).
¹H NMR (300 MHz, CHLOROFORM-D) δ ppm 0.13 (s, 6 H), 1.16 (d, *J* = 6.9 Hz, 12 H), 2.67 (d, *J* = 4.7 Hz, 2 H), 3.40 (s, 3 H), 3.87 (sept, *J* = 6.9 Hz, 2 H), 4.16 (br. s, 1 H).

### Beispiel 4b: Herstellung von N-[(Methoxydimethylsilyl)methyl]-N' ,N'-diisopxopylharnstoff aus (Chlormethyl)methoxydimethylsilan

Eine Mischung von 34,7 g (Chlormethyl)methoxydimethylsilan, 20,3 g Kaliumcyanat und 25,3 g *N,N-*Diisopropylamin in 75 ml wasserfreiem DMF wurde 5 h unter Rühren auf 130 °C erhitzt. Anschließend wurde das Lösungsmittel unter vermindertem Druck entfernt. Man erhielt *N*-[(Methoxydimethylsilyl)methyl]-*N',N'-*diisopropylharnstoff nach fraktionierender Destillation in 11%iger Ausbeute und einer Reinheit von >95% (Analyse mittels ¹H-NMR, siehe Beispiel 4a).

### Beispiel 4c: Herstellung von N-{[Dimethyl(methoxy)silyl]methyl}-N',N'-diphenylharnstoff

Beispiel 4a wurde mit der Änderung wiederholt, daß anstelle von *N,N*-Diisopropylamin eine Lösung von 16,9 g *N,N*-Diphenylamin in 50 ml Toluol eingesetzt wurde. Nach destillativer Entfernung des Lösemittels unter vermindertem Druck und Umkristallisation des Rückstands aus Methyl-tert.-butylether erhielt man *N-*{[Dimethyl(methoxy)silyl]methyl}-*N',N*'-diphenylharnstoff in quantitativer Ausbeute und einer Reinheit von >95% (Analyse mittels ²⁹Si- und ¹H-NMR).
¹H NMR (300 MHz, CHLOROFORM-D) δ ppm 0.11 (s, 6 H), 2.74 (d, *J* = 5.0 Hz, 2 H), 3.33 (s, 3 H), 4.45 (br. s, 1 H), 7.11-7.40 (m, 10H).

### Beispiel 5: Herstellung von N-[(Methoxydimethylsilyl)methylcarbamoyl]morpholin

Beispiel 4a wurde mit der Änderung wiederholt, daß anstelle von *N,N*-Diisopropylamin 8,71 g Morpholin eingesetzt wurden. Man erhielt *N*-[(Methoxydimethylsilyl)methylcarbamoyl]morpholin nach fraktionierender Destillation (Sdp. 133-137° C/0,7 mbar) in 66%iger Ausbeute und einer Reinheit von >95% (Analyse mittels ²⁹Si- und ¹H-NMR).
¹H NMR (300 MHz, CHLOROFORM-D) δ ppm 0.13 und 0.19 (s, 6 H), 2.67 und 2.73(d, *J* = 4.7 Hz, 2 H), 3.33 und 3.36 (t, *J* = 5.0 Hz, 4 H), 3.46 und 3.48 (s, 3 H), 3.69 und 3.73 (t, *J* = 5.0 Hz, 4 H), 4.41 und 4.93 (br. s, 1 H).

### Beispiel 6: Herstellung von 2-{[Dimethoxy(methyl)silyl]methylcarbamoyl}malonsäuredimethylester

Zu einer gerührten und auf 30° C temperierten Mischung von 6,74 g Malonsäuredimethylester und 90,0 mg Natriummethanolat (30%ige Lösung in Methanol) wurden 8,06 g (Isocyanatomethyl)dimethoxy(methyl)silan zugetropft und die klare Lösung 90 min gerührt. Man erhielt 2-{[Dimethoxy(methyl)silyl]methylcarbamoyl}malonsäuredimethyleste r nach Umkristallisation aus iso-Hexan in 56%iger Ausbeute und einer Reinheit von >95% (Analyse mittels ¹H-NMR).
¹H NMR (500 MHz, BENZOL-D6) δ ppm 0.20 (s, 3 H), 2.98 (d, 2 H, *J* = 5.4 Hz), 3.26 (s, 6 H), 3.41 (s, 6 H), 4.45 (s, 1H).

### Beispiel 7: Herstellung von 3,5-Dimethyl-1-{[dimethoxy(methyl)silyl]methylcarbamoyl}pyrazol

Zu einer gerührten und auf 50° C temperierten Lösung von 10,0 g 3,5-Dimethylpyrazol in 80 ml Essigsäureethylester wurden 16,8 g (Isocyanatomethyl)dimethoxy(methyl)silan zugetropft und die klare Lösung 60 min gerührt. Nach destillativer Entfernung des Lösemittels unter vermindertem Druck erhielt man 3,5-Dimethyl-1-{[dimethoxy(methyl)silyl]methylcarbamoyl}pyrazol in quantitativer Ausbeute und einer Reinheit von >95% (Analyse mittels ²⁹Si- und ¹H-NMR).
¹H NMR (500 MHz, BENZOL-D6) δ ppm 0.13 (s, 3 H), 2.10 (s, 3 H), 2.61 (s, 3 H), 2.96 (d, *J* = 5.4 Hz, 2 H), 3.36 (s, 6 H), 5.62 (s, 1 H), 7.44 (br. s, 1 H).

### Beispiel 8: Herstellung von 2-Isopropyl-1-{[dimethoxy(methyl)silyl]methylcarbamoyl}imidazol

Zu einer gerührten und auf 50° C temperierten Lösung von 3,00 g 2-Isopropylimidazol in 50 ml Essigsäureethylester wurden 4,39 g (Isocyanatomethyl)dimethoxy(methyl)silan zugetropft und die Mischung 60 min gerührt. Man erhielt 2-Isopropyl-1-{[dimethoxy(methyl)silyl]methylcarbamoyl}imidazol nach Filtration als farblosen Feststoff in quantitativer Ausbeute und einer Reinheit von >95% (Analyse mittels ²⁹Si- und ¹H-NMR). ¹H NMR (500 MHz, BENZOL-D6) δ ppm 0.10 (s, 3 H), 1.57 (d, *J* = 6.6 Hz, 6 H), 2.74 (d, *J* = 5.0 Hz, 2 H), 3.31 (s, 6 H), 3.94 (sept, *J* = 6.6 Hz, 1 H), 4.92 (br. s, 1 H), 6.55 (d, *J* = 1.2 Hz, 1H), 7.04 (d, *J* = 1.5 Hz, 1 H).

## Patentansprüche

1. Organosiliciumverbindungen der allgemeinen Formel (I)
(RO)₃₋ₙ(R¹)ₙSi-CH₂-N(H)-C(O)-X (I),
wobei
**R** ein C₁-C₁₅-Kohlenwasserstoff-Rest oder ein Acetylrest,
**R¹** ein Wasserstoffatom oder einen gegebenenfalls mit -CN,-NCO, -NR^{x}₂, -COOH, -COOR^{x}, -Halogen, -Acryl, -Epoxy, -SH,-OH oder -CONR^{x}₂ substituierten Si-C gebundenen C₁-C₂₀-Kohlenwasserstoffrest, in dem jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N=,-N=N-,oder -P= ersetzt sein können,
**n** die Werte 0, 1, 2,
**X** eine Gruppe, die ausgewählt wird aus den Gruppen -NR²R³, -S-R⁵, C(H) (CO₂R⁵) ₂ und -O-N=CR²R³ und
**R², R³** und **R⁵** die Bedeutungen von **R¹** aufweisen, oder einen zyklischen, gegebenenfalls verzweigten Kohlenwasserstoffrest mit 2-30 Kohlenstoffatomen mit mindestens 3 Ringatomen, der gegenbenenfalls durch eine oder mehrere Gruppen -O-, -CO-, -COO-, -OCO-, -S-, =N-,-NR¹-, -CONR¹- funktionalisiert sein kann,
beteuten.

2. Organosiliciumverbindungen nach Anspruch 1, bei denen **R** ein C₁-C₈-Kohlenwasserstoff-Rest oder Acetylrest bedeutet.

3. Organosiliciumverbindungen nach Anspruch 1 und 2, bei denen **R¹** einen C₁-C₃-Alkyl-Rest, bedeutet.

4. Verfahren zur Herstellung der Organosiliciumverbindungen der allgemeinen Formel (I) gemäss Anspruch 1, bei dem Isocyanatgruppen aufweisende Organosiliciumverbindungen allgemeinen Formel (II)
(RO)₃₋ₙ(R¹)ₙsi-CH₂-N=C=O (II),
mit Verbindungen H**X** umgesetzt werden, wobei **R, R¹**, **X** und **n** die in Anspruch 1 aufgeführten Bedeutungen aufweisen.

5. Verfahren zur Herstellung der Organosiliciumverbindungen der allgemeinen Formel (I) gemäss Anspruch 1, bei dem Chloralkylgruppen aufweisende Organosiliziumverbindungen der allgemeinen Formel (III)
(RO)₃₋ₙ(R¹)ₙSi-CH₂-Cl (III),
mit Verbindungen H**X** und Salzen der allgemeinen Formel (IV),
M(OCN)ₘ (IV),
umgesetzt werden, wobei
**M** ein Alkali- oder Erdalkalimetall und
**m** die Werte 1 oder 2 bedeuten und
**R, R¹, X** und **n** die in Anspruch 1 aufgeführten Bedeutungen aufweisen.

6. Verfahren zur Abspaltung der Blockierungsmittel H**X** durch Erwärmen in einem Temperaturbereich von 30 - 250 °C aus den Organosiliciumverbindungen der allgemeinen Formel (I) gemäss Anspruch 1, wobei **X** die in Anspruch 1 aufgeführten Bedeutungen aufweisen.

7. Verfahren nach Anspruch 4 bis 6, bei dem das Blockierungsmittel H**X** ausgewählt wird aus 2-Butanonoxim, Cyclohexanonoxim, Methylisopropylketonoxim, Methylisobutylketonoxim, Methyl-tert.-butylketonoxim, Diisopropylketonoxim, 2,2,6,6-Tetramethylcyclohexanonoxim, Tetramethylcyclobutandionmonooxim, Thiophenol oder 2-Mercaptopyridin, Malonsäuredimethylester, Malonsäurediethylester, Acetessigsäureethylester, Cyanessigsäureethylester, Acetylaceton, Methylphenylamin, Diphenylamin, Diisopropylamin, Dicyclohexylamin, Benzyl-tert.-butylamin, Tert.-butylmethylamin, Tert.-Butyl-isopropylamin, 2,2,6,6-Tetramethylpiperidin, Imidazol, 2-Isopropylimidazol, 3,5-Dimethylpyrazol, 5-Methyl-2,3-dihydropyrazol-3-on, ε-Caprolactam und *N*-Methylacetamid.

8. Verwendung der Organosiliciumverbindungen der allgemeinen Formel (I) gemäss Anspruch 1 in Beschichtungsmitteln.

## Claims

1. Organosilicon compounds of the general formula (I)
(RO)₃₋ₙ(R¹)ₙSi-CH₂-N(H)-C(O)-X (I),
where
**R** is a C₁-C₁₅ hydrocarbon radical or an acetyl radical,
**R¹** is a hydrogen atom or an Si-C-bonded C₁-C₂₀ hydrocarbon radical which is unsubstituted or substituted by -CN, -NCO, -NR^{x}₂, -COOH, -COOR^{x}, -halogen, -acryloyl, -epoxy, -SH, -OH or -CONR^{x}₂ and in which in each case one or more nonadjacent methylene units can be replaced by groups -O-, -CO-, -COO-, -OCO-, or -OCOO-, -S-, or -NR^{x}-, and in which one or more nonadjacent methine units can be replaced by groups -N=, -N=N-, or -P=,
**n** has the value 0, 1 or 2,
**X** is a group selected from the groups -NR²R³, -S-R⁵, -C(H) (CO₂R⁵)₂, and -O-N=CR²R³, and
**R²**, **R³** and **R⁵** have the definitions of **R¹**, or are a cyclic, optionally branched hydrocarbon radical having 2-30 carbon atoms with at least 3 ring atoms, which where appropriate may be functionalized by one or more groups -O-, -CO-, -COO-, -OCO-, -S-, =N-, -NR¹-, -CONR¹-.

2. Organosilicon compounds according to Claim 1, wherein **R** is a C₁-C₈ hydrocarbon radical or acetyl radical.

3. Organosilicon compounds according to Claim 1 and 2, wherein **R¹** is a C₁-C₃ alkyl radical.

4. Process for preparing the organosilicon compounds of the general formula (I) according to Claim 1, wherein organosilicon compounds containing isocyanate groups, of general formula (II)
(RO)₃₋ₙ(R¹)ₙSi-CH₂-N=C=O (II)
are reacted with compounds H**X**, where **R, R¹, X** and **n** have the definitions set out in Claim 1.

5. Process for preparing the organosilicon compounds of the general formula (I) according to Claim 1, wherein organosilicon compounds containing chloroalkyl groups, of the general formula (III)
(RO)₃₋ₙ(R¹)ₙSi-CH₂-Cl (III)
are reacted with compounds H**X** and salts of the general formula (IV)
M(OCN)ₘ (IV)
where
**M** is an alkali metal or alkaline earth metal and
**m** has the value 1 or 2, and
**R, R¹, X** and **n** have the definitions set out in Claim 1.

6. Process for eliminating the blocking agents H**X** by heating in a temperature range of 30-250°C from the organosilicon compounds of the general formula (I) according to Claim 1, where **X** has the definitions set out in Claim 1.

7. Process according to Claim 4 to 6, in which the blocking agent H**X** is selected from 2-butanone oxime, cyclohexanone oxime, methyl isopropyl ketone oxime, methyl isobutyl ketone oxime, methyl tert-butyl ketone oxime, diisopropyl ketone oxime, 2,2,6,6-tetramethylcyclohexanone oxime, tetramethylcyclobutanedione monooxime, thiophenol or 2-mercaptopyridine, dimethyl malonate, diethyl malonate, ethyl acetoacetate, ethyl cyanoacetate, acetylacetone, methylphenylamine, diphenylamine, diisopropylamine, dicyclohexylamine, benzyl-tert-butylamine, tert-butylmethylamine, tert-butylisopropylamine, 2,2,6,6-tetramethylpiperidine, imidazole, 2-isopropylimidazole, 3,5-dimethylpyrazole, 5-methyl-2,3-dihydropyrazol-3-one, ε-caprolactam, and *N*-methylacetamide.

8. Use of the organosilicon compounds of the general formula (I) according to Claim 1 in coating compositions.

## Revendications

1. Composés organiques du silicium de forme générale (I)
(RO)₃₋ₙ(R¹)ₙSi-CH₂-N(H)-C(O)-X (I),
dans laquelle
R représente un groupe hydrocarbure en C₁ à C₁₅ ou un groupe acétyle,
R¹ représente un atome d'hydrogène ou un groupe hydrocarbure en C₁ à C₂₀ à liaison Si-C et substitué avec un groupe -CN, -NCO, -NR^{x}₂, -COOH, halogène, acryle, époxy, -SH, -OH ou -CONR^{x}₂, dans lequel une ou plusieurs unités méthylène non voisines l'une de l'autre peuvent être remplacées par les groupes -O-,-CO-, -COO-, -OCO- ou -OCOO-, -S- ou -NR^{x}- et dans lequel une ou plusieurs unités méthine non voisines l'une de l'autre peuvent être remplacées par des groupes -N=,-N=N- ou -P=,
n représente les valeurs 0, 1 ou 2,
X représente un groupe sélectionné parmi les groupes -NR²R³, -S-R⁵, -C (H) (CO₂R⁵)₂ et -O-N=CR²R³ et
R², R³ et R⁵ ont la même signification que R¹ ou représentent un groupe hydrocarbure cyclique, éventuellement ramifié, qui compte de 2 à 30 atomes de carbone avec au moins 3 atomes cycliques et qui peut éventuellement être fonctionnalisé avec ou plusieurs groupes -O-, -CO-, -COO-, -OCO-, -S-, =N-, -NR¹, -CONR¹-.

2. Composés organiques du silicium selon la revendication 1, dans lesquels R représente un groupe hydrocarbure en C₁ à C₈ ou un groupe acétyle.

3. Composés organiques du silicium selon les revendications 1 et 2, dans lesquels R¹ représente un groupe alkyle en C₁ à C₃.

4. Procédé de fabrication des composés organiques du silicium de formule générale (I) selon la revendication 1, dans lequel on fait réagir des composés organiques du silicium qui présentent des groupes isocyanate, de formule générale (II)
(RO)₃₋ₙ(R¹)ₙSi-CH₂-N=C=O (II),
avec des composés HX, R, R¹, X et n ayant les significations indiquées en revendication 1.

5. Procédé de fabrication des composés organiques du silicium de formule générale (I) selon la revendication 1, dans lequel on fait réagir des composés organiques du silicium qui présentent des groupes chlororalkyle, de formule générale (III)
(RO)₃₋ₙ(R¹)ₙSi-CH₂-Cl (III),
avec des composés HX et des sels de formule générale (IV)
M(OCN)ₘ (IV),
M représentant un métal alcalin ou un métal alcalino-terreux,
m ayant la valeur de 1 ou 2 et
R, R¹, X et n ont les significations indiquées en revendication 1.

6. Procédé de dissociation par chauffage dans une plage de température de 30 à 250 °C des agents de blocage HX de composés organiques du silicium de formule générale (I) selon la revendication 1, X ayant les significations indiquées en revendication 1.

7. Procédé selon les revendications 4 à 6, dans lequel l'agent de blocage HX est sélectionné parmi le butanonoxime, le cyclohexanonoxime, le méthylisopropylcétonoxime, le méthylisobutylcétonoxime, le méthyl-tert.-butylcétonoxime, le diisopropylcétonoxime, le 2,2,6,6-tétraméthylcyclohexanonoxime, le tétraméthylcyclobutanedionemonooxime, le thiophénol ou la 2-mercaptopyridine, le diméthylester d'acide malonique, le diéthylester d'acide malonique, l'éthylester d'acide acétique, l'éthylester d'acide cyanoacétique, l'acétylacétone, la méthylphénylamine, la diphénylamine, la diisopropylamine, la dicyclohexylamine, la benzyl-tert.-butylamine, la tert.-butylméthylamine, la tert.-butylisopropylamine, la 2,2,6,6-tétraméthylpipéridine, l'imidazole, le 2-isopropylimidazole, le 3,5-diméthylpyrazole, la 5-méthyl-2,3-dihydropyrazol-3-one, l'ε-caprolactame et le N-méthylacétamide.

8. Utilisation des composés organiques du silicium de formule générale (I) selon la revendication 1 dans des agents de revêtement.
